# EUROPÄISCHE PATENTSCHRIFT

(11) **EP 1 078 432 B1**
(45) Veröffentlichungstag und Bekanntmachung des Hinweises auf die Patenterteilung: **10.12.2008**
(21) Anmeldenummer: 99924865.1
(22) Anmeldetag: 03.05.1999
(51) Int. Cl.: H02H 3/33, H02H 1/04

(54) **SCHUTZSCHALTGERÄT**
POWER CIRCUIT BREAKER
DISJONCTEUR DE PROTECTION

(30) Priorität: 14.05.1998 EP 98108823
(43) Veröffentlichungstag der Anmeldung: 28.02.2001
(73) Patentinhaber: SIEMENS AKTIENGESELLSCHAFT, 80333 München (DE)
(72) Erfinder: BAUER, Bernhard, D-93053 Regensburg (DE)
(86) Internationale Anmeldenummer: PCT/EP1999/002994
(87) Internationale Veröffentlichungsnummer: WO 1999/060681

(56) Entgegenhaltungen:
- WO-A-96/29770
- GB-A- 2 258 095
- PATENT ABSTRACTS OF JAPAN vol. 018, no. 434 (E-1592), 12. August 1994 (1994-08-12) & JP 06 133448 A (MATSUSHITA ELECTRIC WORKS LTD), 13. Mai 1994 (1994-05-13)

## Beschreibung

Die Erfindung bezieht sich auf ein Schutzschaltgerät, insbesondere auf einen Differenzstrom-Schutzschalter oder Differenzstrom-Zusatz, mit einstellbarer Zeitverzögerung.

Ein derartiges Schutzschaltgerät dient zur Sicherstellung des Schutzes gegen einen gefährlichen Körperstrom in einer elektrischen Anlage. Ein solcher tritt beispielsweise dann auf, wenn eine Person ein spannungsführendes Teil einer elektrischen Anlage berührt. Der Fehler- oder Differenzstrom fließt dann über die Person als Körperstrom gegen Erde ab. Der zum Schutz gegen gefährliche Körperströme eingesetzte Schutzschalter trennt bei Überschreiten des sogenannten Bemessungsfehlerstromes sicher und schnell die betroffenen Stromkreise vom Netz.

Der Aufbau eines Schutzschalters ist beispielsweise aus der "etz" (1986), Heft 20, Seiten 938 bis 945, bekannt. Dort sind insbesondere in den Bildern 1 bis 3 Prinzipschaltbilder und Funktionsprinzipien eines Fehlerstrom-Schutzschalters (FI-Schutzschalter) und eines Differenzstrom-Schutzschalters (DI-Schutzschalter) dargestellt.

Der FI- und der DI-Schutzschalter sind in ähnlicher Art und Weise aus drei Baugruppen aufgebaut. In der Sekundärwicklung eines Summenstromwandlers, durch dessen Wandlerkern alle stromführenden Leiter eines Leiternetzes geführt sind, wird im Falle eines Fehlerstroms ein Spannungssignal induziert, das einen über eine Auslösekreiselektronik mit der Sekundärwicklung verbundenen Auslöser ansteuert. Der Auslöser ist seinerseits mit einem Schaltschloß gekoppelt, über das bei Ansprechen des Auslösers die Kontakte eines in der oder jeder Leitung liegenden Leistungsschalters geöffnet werden. Dabei entnimmt der FI-Schutzschalter die zur Auslösung notwendige Energie netzspannungsunabhängig aus dem Fehlerstrom selbst, während beim DI-Schutzschalter die Auslösung netzspannungsabhängig erfolgt. Dazu wird dem vom Leitungsnetz gespeisten DI-Auslösekreis des DI-Schutzschalters oder DI-Zusatzes bei Auftreten eines Fehlerstroms das vom Summenstromwandler abgegebene Signal zugeführt.

Häufig sind derartige DI-Schutzschalter mit einer Auslösezeitverzögerung versehen, welche bei Auftreten eines Fehlerstroms erst nach einer einstellbaren Verzögerungszeit die Ansteuerung des Auslösers freigibt. Auf diese Weise wird verhindert, daß ein kurzzeitiger betrieblich bedingter Fehlerstrom zu einer nicht gewünschten Auslösung des Schutzschalters und damit zur Störung von Betriebsabläufen durch Netzabschaltung führt. Sowohl die Randbedingungen, unter denen eine Auslösung des Schutzschalters erfolgen muß, als auch die Randbedingungen, unter denen ein derartiger Schutzschalter nicht auslösen darf, sind beispielsweise für DI-Zusätze von Leistungsschaltern in der IEC-Norm 947-2 vorgeschrieben. Die Erfüllung der genannten Norm wird einerseits mittels einer Nichtauslöseprüfung getestet. Dabei wird ein sinusförmiger Fehlerstrom der Größe 2xIΔn (IΔn = Nennfehlerstrom) und der Länge der eingestellten Verzögerungszeit erzeugt. Eine Auslösung des getesteten Schutzschalters darf hierbei nicht erfolgen. Andererseits ist gemäß der IEC 947-2 eine Auslöseprüfung vorgeschrieben, nach der der Schutzschalter bei einem Fehlerstrom definierter Größe innerhalb einer begrenzten Zeit auslösen muß.

Die gleichzeitige Erfüllung beider Prüfungen und die zusätzliche Erfüllung der ebenfalls geforderten Stoßstromprüfung, bei der die Nichtauslösung bei zeitlich sehr kurzen (z.B. 8µsec Anstiegszeit und 20µsec Rückenhalbwertszeit), jedoch in der Amplitude sehr hohen Fehlerströmen (z.B. 250A) gefordert ist, erfordert eine spezielle Lösung, insbesondere dann, wenn bei pulsstrom- oder allstromsensitiven Ausführungen, welche diverse Auslöseanforderungen bei unterschiedlichen Auslösefehlerströmen erfüllen müssen, eine möglichst konstante Zeitverzögerung, unabhängig von der Fehlerstromform, erreicht werden soll.

Ein Schutzschaltgerät gemäß dem Oberbegriff des Anspruchs 1 ist aus PATENT ABSTRACTS OF JAPAN vol.018, no.434 (E-1592), 12. August 1994 (1994-08-12) & JP 06 133448 A (MATSUSHITA ELECTRIC WORKS LTD), 13.Mai 1994 (1994-05-13) bekannt. Anwendung dort ist die Erdschlusserfassung.

Der Erfindung liegt daher die Aufgabe zugrunde, für ein DI-Schutzschaltgerät mit einstellbarer Auslösezeitverzögerung eine Verzögerungsschaltung anzugeben, welche eine hohe Stromfestigkeit und eine möglichst konstante, von der Fehlerstromform unabhängige Auslösezeitverzögerung aufweist.

Diese Aufgabe wird erfindungsgemäß gelöst durch die Merkmale des Anspruchs 1. Danach umfasst die Verzögerungsschaltung ein Glättungsmodul, das eine aus einem Fehlerstrom abgeleitete Eingangsspannung in geglätteter Form an zwei in Reihe geschaltete Komparatoren weiterleitet, denen ein Zeitverzögerungsmodul mit einstellbarer Verzögerungszeit zwischengeordnet ist. Weiterhin sind drei Tiefpässe vorgesehen.

Durch die beiden Komparatoren und das zwischen diese geschaltete Zeitverzögerungsmodul wird erreicht, dass ein auftretender Fehlerstrom nur dann zu einem Auslösen des Schutzschalters führt, wenn die zugehörige Eingangsspannung mindestens während einer der eingestellten Verzögerungszeit entsprechenden Zeitspanne einen vorgegebenen Einschaltpegel übersteigt. Mittels des Glättungsmoduls wird vermieden, dass aufgrund der von der Fehlerstromform abhängigen Signal-Welligkeit die Auslösezeitverzögerung bei Fehlerströmen mit hoher Signalwelligkeit, wie z.B. bei phasenangeschnittenen Fehlerströmen, die Auslösezeitverzögerung durch ständiges Über- und Unterschreiten der Komparator-Schaltschwelle deutlich verlängert wird und somit die Auslösezeitverzögerung je nach Fehlerstromform unterschiedlich wirksam wird.

Vorzugsweise ist dem ersten Komparator ein Stoßstromfilter vorgeschaltet. Dieser verhindert, daß kurzzeitige Stoßströme mit geringer Repetitionsrate bei einer kurzen eingestellten Verzögerungszeit ein unbeabsichtigtes Auslösen des Schutzschalters zur Folge haben.

Das Glättungsmodul ist zweckmäßigerweise als Diode mit nachgeschaltetem Tiefpaß in Form eines R-C-Glieds realisiert, dessen Kondensator über einen mit einem ohm'schen Widerstand versehenen ersten Entladekreis entladen wird. Auf diese Weise sind die Ladezeitkonstante und die Entladezeitkonstante des Tiefpasses unabhängig voneinander vorgebbar. Dies wiederum ermöglicht eine besonders präzise Einstellung eines gewünschten Glättungsgrades. Als besonders vorteilhaft hat sich hierbei erwiesen, die Entladezeitkonstante etwa um einen Faktor zwischen 5 und 15 größer als die Ladezeitkonstante zu wählen.

Um zu verhindern, daß der erste Tiefpaß aufgrund dessen Entladezeit die zur Erfüllung der Nichtauslöseprüfung erforderliche Integrationszeitkonstante des Zeitverzögerungsmoduls unnötig verlängert und damit die Einhaltung hier geforderten Auslösezeitgrenzwerte erschwert oder unmöglich macht, ist dem ersten Entladekreis eine Zenerdiode parallelgeschaltet. Über diese wird die maximal am Kondensator anliegende Spannung begrenzt, wodurch sich dieser wiederum schnell entlädt. Die Durchbruchspannung der Zenerdiode ist günstigerweise nur geringfügig größer als der Einschaltpegel des ersten Komparators. Eine Überladung des Kondensators über den zur Auslösung des Schaltprozesses des ersten Komparators erforderlichen Wert wird hierdurch wirksam vermieden. Somit wird die Zeitspanne, innerhalb derer die Kondensatorspannung nach Unterbrechung des Fehlerstromes die Referenzspannung wieder unterschreitet, verkürzt.

Mittels einer üblichen Beschaltung des ersten Komparators mit zwei ohm'schen Widerständen ist dieser vorteilhafterweise mit einer Schalthysterese ausgestattet. Anstelle einer einzelnen Schwellspannung als Einschaltpegel und als Ausschaltpegel sind bei einer Schalthysterese zwei Schwellspannungen vorgesehen. Dabei erfolgt der Einschaltprozeß des Komparators bei Überschreiten der als Einschaltpegel dienenden höheren Schwellspannung. Erst bei Unterschreiten der als Ausschaltpegel vorgesehenen niedrigeren Schwellspannung erfolgt der Ausschaltvorgang des Komparators. Auf diese Weise wird verhindert, daß die Signalwelligkeit der Eingangsspannung im Bereich des Einschaltpegels zu einem wiederholten Ein- und Ausschalten des Komparators führt. Die Schalthysterese und damit die Differenz zwischen dem Einschalt- und dem Ausschaltpegel ist zweckmäßigerweise auf die Parameter des Glättungsmoduls abgestimmt. Dabei ist die Schalthysterese um so kleiner vorgegeben, je größer der Glättungsgrad ist. Durch Versuche hat sich eine Schalthysterese von ≥ 100mV als besonders vorteilhaft herausgstellt.

Das Zeitverzögerungsmodul ist in einfacher Weise in Form eines zweiten kapazitiven Tiefpasses realisiert. Zur Einstellung der Verzögerungszeit wird dabei die Kapazität variiert.

In einer besonders vorteilhaften Ausführung sind zu diesem Zweck eine Anzahl von Kondensatoren unterschiedlicher Kapazität vorgesehen, von denen jeweils einer oder - entsprechend einem Kondensator der Kapazität 0 - keiner als Kapazität in den Tiefpaß geschaltet wird. Auf diese Weise ist die Verzögerungszeit mehrstufig einstellbar.

Der Stoßstromfilter ist bevorzugt in Form eines durch eine Diode entkoppelten dritten Tiefpasses in Form eines R-C-Glieds mit einem zweiten Entladekreis ausgeführt. Dabei beträgt die Entladezeitkonstante günstigerweise mehr als das 50-fache der Ladezeitkonstante. Infolge der vergleichsweise hohen Entladezeit wirkt der Stoßstromfilter nur auf kurze Stromstöße mit einer geringen Repititionsrate. Die dem ersten Entladekreis parallelgeschaltete Zenerdiode wirkt gleichzeitig für den zweiten Entladekreis spannungsbegrenzend.

Die mit der Erfindung erzielten Vorteile bestehen insbesondere darin, daß das Schutzschaltgerät durch eine Verzögerungsschaltung mit zwei in Reihe geschalteten Komparatoren, denen ein Zeitverzögerungsmodul zwischengeordnet ist, und mit einem dem ersten Komparator vorgeschalteten Glättungsmodul gegenüber kurzzeitigen Fehlerströmen ein von der Fehlerstromform unabhängiges Nicht-Auslöseverhalten zeigt.

Infolge einer bevorzugten Zusammenschaltung von drei Tiefpässen mit unterschiedlichem Verhältnis von Lade- und Entladezeitkonstante ist unabhängig von der eingestellten Verzögerungszeit einerseits das Auslösen des Schutzschalters unter Einfluß eines kurzzeitigen Fehlerstoßstromes wirksam verhindert. Andererseits ist bei Auftreten eines permanent anstehenden Fehlerstromes eine nicht unnötig lange Auslösezeit und somit eine vorschriftenkonforme Auslösezeitbegrenzung ermöglicht.

Die Auslösezeitbegrenzung wird sichergestellt durch einen optimiert eingestellten Glättungsgrad des Glättungsmoduls in Verbindung mit einer darauf abgestimmten großen Schalthysterese des ersten Komparators. Hierbei ist die Auslösezeit weitgehend unabhängig von der Form des Fehlerstroms. Insbesondere ergibt sich bei phasenangeschnittenen Fehlerströmen keine wesentlich längere Auslösezeit als bei sinusförmigen Fehlerströmen.

Nachfolgend wird ein Ausführungsbeispiel der Erfindung anhand einer Zeichnung näher erläutert. Dabei zeigen:
- FIG 1: schematisch einen DI-Schutzschalter mit einer Verzögerungsschaltung,
- FIG 2: in einem Blockschaltbild die Auslösesteuerung gemäß FIG 1,
- FIG 3: in einem Spannungs-Zeit-Diagramm die Funktionsweise eines (ersten) Komparators der Auslösesteuerung gemäß FIG 2, und
- FIG 4: ein elektronisches Schaltbild der Verzögerungsschaltung gemäß FIG 2.

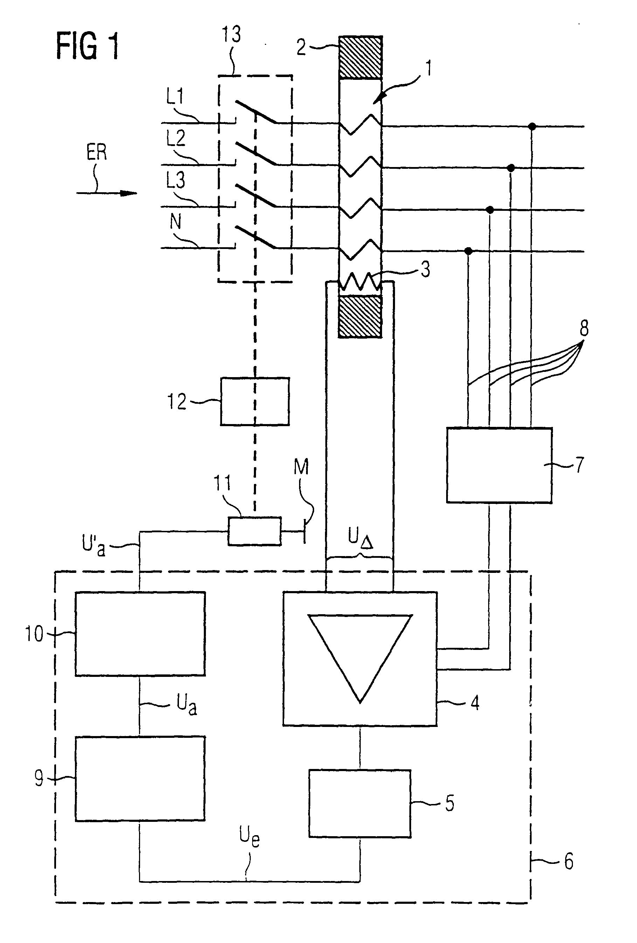

Der in FIG 1 dargestellte DI-Schutzschalter umfaßt einen Summenstromwandler 1 mit einem Wandlerkern 2, durch welchen die drei Phasenleitungen L1,L2,L3 sowie der Nulleiter N eines Vier-Leiternetzes (nachfolgend mit Ln bezeichnet) geführt sind. Der Schutzschalter ist dabei einem (nicht dargestellten) elektrischen Verbraucher vorgeschaltet, welcher entlang der Einspeiserichtung ER aus dem Leiternetz Ln mit Strom versorgt wird.

Der Wandlerkern 2 ist desweiteren mit einer Sekundärspule 3 umwickelt. Im störungsfreien Betrieb des Leiternetzes (L1 bis L3,N) ist die Summe der durch den Wandlerkern 2 fließenden Ströme stets Null. Eine Störung tritt dann auf, wenn - z.B. infolge eines Leckstroms - ein Teil des zugeführten Stromes verbraucherseitig über Erde abgeführt wird. In diesem Fall ergibt die Summe der durch den Wandlerkern 2 fließenden Ströme einen von Null verschiedenen Betrag. Dieser Differenzstrom oder Fehlerstrom induziert in der Sekundärspule 3 des Summenstromwandlers 1 eine Differenzspannung U_{Δ}, welche als Maß für den aufgetretenen Fehlerstrom herangezogen wird. Die in der Sekundärspule 3 erzeugte Differenzspannung U_{Δ} durchläuft dabei zunächst einen Verstärker 4 sowie einen Gleichrichter 5 eines Auslösekreises 6. Zum Betrieb des Verstärkers 4 wird ein DI-Schutzschalter - im Gegensatz zu einem FI-Schutzschalter - über ein Netzgerät 7 mit Strom versorgt. Das Netzgerät 7 ist zu diesem Zweck über eine Versorgungsleitung 8 häufig verbraucherseitig an das Leiternetz Ln angeschlossen.

Die Differenzspannung U_{Δ} wird in verstärkter und gleichgerichteter Form als Eingangsspannung Uₑ einer Verzögerungsschaltung 9 zugeführt. Übersteigt die Eingangsspannung Uₑ hinsichtlich ihres Betrages und ihrer Dauer einen Schwellwert, so gibt die Verzögerungsschaltung 9 eine Auslösespannung Uₐ an die Ansteuerschaltung 10 eines Auslösers 11 ab. Der Auslöser 11, der bevorzugt in Form einer Relaisspule realisiert ist, betätigt ein mechanisches Schaltschloß 12, welches die Kontakte eines auf alle Leitungen L1 bis L3,N des Vier-Leiternetzes Ln wirkenden Leistungsschalters 13 öffnet. Die Auslösespannung U'ₐ der Ansteuerschaltung 10 wird dabei über den Auslöser 11 an Masse M abgeführt.

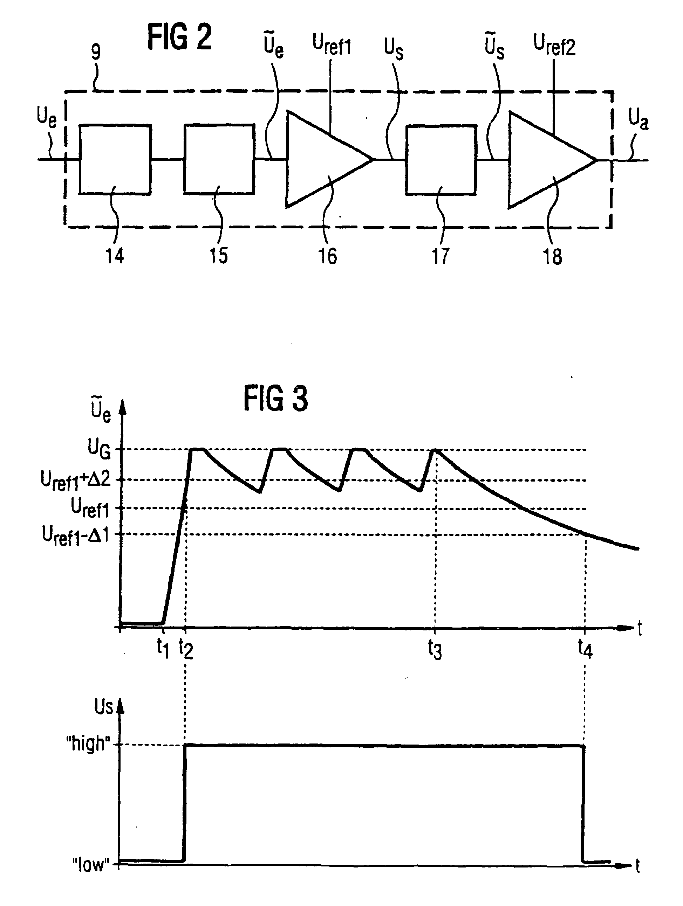

Die Verzögerungsschaltung 9 ist in FIG 2 als Blockschaltbild dargestellt. In der Verzögerungsschaltung 9 durchläuft die als pulsierende Gleichspannung zugelieferte Eingangsspannung Uₑ zunächst ein Glättungsmodul 14. Dabei wird die Welligkeit, d.h. der Wechselspannungsanteil bezogen auf den Gleichspannungsanteil, der Eingangsspannung Uₑ vermindert. Dadurch wird eine modifizierte Eingangsspannung Ũₑ mit einem vergleichsweise glatten Zeitverlauf erzeugt.

Einzelne, selten wiederkehrende Stoßströme, wie sie beispielsweise durch eine Gewitterüberspannung erzeugt werden, werden mittels eines dem Glättungsmodul 14 nachgeschalteten Stoßstromfilters 15 unterdrückt. Die geglättete und von Stoßströmen mit geringer Repetitionsrate bereinigte Eingangsspannung Ũₑ wird eingangsseitig einem ersten Komparator 16 zugeführt. Übersteigt die Eingangsspannung Ũₑ eine dem ersten Komparator 16 durch eine Referenzspannung U_{ref1} vorgegebene Einschaltschwelle, so gibt der erste Komparator 16 eine von Null verschiedene, im folgenden als "high" klassifizierte Signalspannung Uₛ aus. Über ein Zeitverzögerungsmodul 17 wird eine modifizierte Signalspannung Ũₛ einem zweiten Komparator 18 zugeleitet. Infolge des Zeitverzögerungsmoduls 17 liegt jedoch diese modifizierte Signalspannung Ũₛ nicht unmittelbar mit ihrem Maximalbetrag "high" am Eingang des zweiten Komparators 18 an. Stattdessen bewirkt das Zeitverzögerungsmodul 17 ein allmähliches Ansteigen der Signalspannung Ũₛ, so daß erst nach einer vorgegebenen Verzögerungszeit eine als Einschaltpegel des zweiten Komparators vorgegebene Referenzspannung U_{ref2} erreicht wird. Der Einschaltpegel U_{ref2} des zweiten Komparators 18 wird somit nur dann überschritten, wenn während der gesamten Zeitspanne der Verzögerungszeit der Einschaltpegel U_{ref1} des ersten Komparators 16 durch die Eingangsspannung Ũₑ überschritten war. Bei Überschreiten des Einschaltpegels U_{ref2} des zweiten Komparators 18 gibt dieser eine Ausgangsspannung Uₐ der Größe "high" an die Ansteuerschaltung 10 ab.

Wird dagegen innerhalb der Verzögerungszeit der Ausschaltpegel des ersten Komparators 16 unterschritten, schaltet dieser die Signalspannung Uₛ auf den vergleichsweise geringen Betrag "low" zurück. Dies führt zu einem durch das Zeitverzögerungsmodul 17 verlangsamten Absinken der Signalspannung Ũₛ am Eingang des zweiten Komparators 18. Der mit der Auslösung des Schutzschalters verbundene Schaltprozeß des zweiten Komparators 18 unterbleibt dadurch.

Um einen stabilen Schaltprozeß zu gewährleisten, weist der erste Komparator 16 eine Schalthysterese Δ auf. Die Funktionsweise eines derartigen Komparators mit Schalthysterese innerhalb der Verzögerungsschaltung 9 ist in FIG 3 skizziert. Anders als bei einem Komparator ohne Schalthysterese, bei dem der Einschaltpegel und der Ausschaltpegel den gleichen Betrag haben, ist der Ausschaltpegel U_{ref1} - Δ1 des ersten Komparators 16 gegenüber dessen Referenzspannung U_{ref1} um die Spannung Δ1 erniedrigt. Überschreitet zum Zeitpunkt 2, bedingt durch einen zum Zeitpunkt 1 einsetzenden Fehlerstrom, die ansteigende Eingangsspannung Ũₑ den Einschaltpegel U_{ref1} + Δ2 erstmalig, so schaltet der Komparator 16 die Ausgangsspannung Uₛ von "low" auf "high". Die Anstiegsgeschwindigkeit von Ũₑ ist abhängig von der Ladezeitkonstante des Glättungsmodules 14 und des Stoßstromfilters 15. Ein weiteres Unter- oder Überschreiten des Einschaltpegels U_{ref1} + Δ2 durch die Welligkeit der Eingangsspannung Ũₑ führt nicht zu weiteren Schaltprozessen. Ũₑ wird durch eine im Glättungsmodul enthaltene Spannungsbegrenzung auf eine Grenzspannung U_{G} begrenzt. Reißt zum Zeitpunkt t₃ der Fehlerstrom ab, sinkt Ũₑ wieder ab. Die Zeit bis zum Erreichen der des Ausschaltpegels U_{ref1} - Δ1 wird bestimmt von der Entladekonstante des Glättungsmodules 14 und ggf., wenn Ũₑ entsprechend groß ist, von der Höhe der Begrenzungsspannung U_{G}. Ein Zurückschalten der Signalspannung Uₛ von "high" auf "low" erfolgt erst dann, wenn die Eingangsspannung Ũₑ den Ausschaltpegel U_{ref1} - Δ1 zum Zeitpunkt t₄ unterschreitet.

Durch FIG 3 wird deutlich, daß die für die Nichtauslöseprüfung erforderliche Integrationszeitkonstante im Zeitverzögerungsmodul 17 nicht nur von der vorgeschriebenen Dauer des Nichtauslösefehlerstroms, sondern auch von der Entladezeitkonstante des Glättungsmoduls 14 und von der Höhe der Grenzspannung U_{G} abhängig ist. Je niedriger die Entladezeitkonstante und die Grenzspannung U_{G} sind desto niedriger ist die für die Nichtauslöseprüfung erforderliche Integrationszeitkonstante im Zeitverzögerungsmodul 17. Dies begünstigt die Einhaltung der Auslösezeitgrenzwerte bei der ebenfalls geforderten Auslöseprüfung.

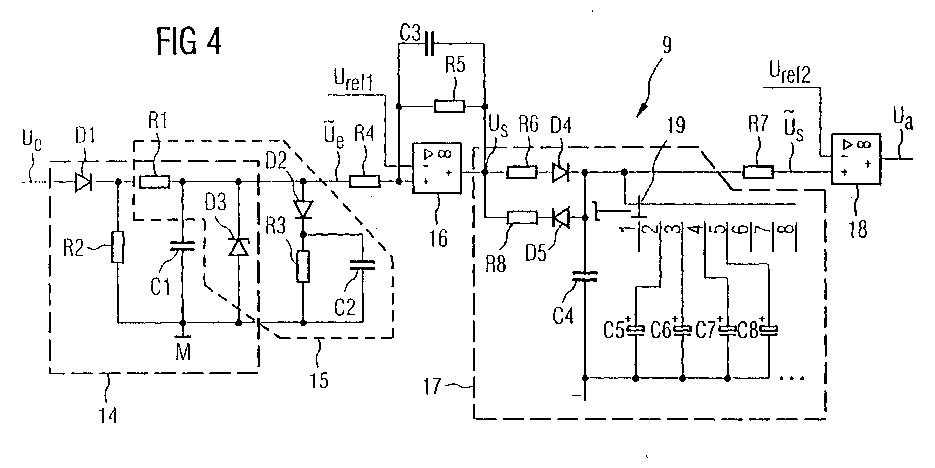

FIG 4 zeigt eine bevorzugte Ausführungsform der Verzögerungsschaltung 9 in einem elektronischen Schaltbild. Das Glättungsmodul 14 ist danach in Form einer Diode D1 mit einem nachgeschalteten ersten Tiefpasses R1,C1 ausgeführt. Dessen Kondensator C1 wird durch die angelegte Eingangsspannung Uₑ über einen Ladewiderstand R1 geladen. Beim Absinken der Eingangsspannung Uₑ erfolgt die Entladung von C1 über die Widerstände R1+R2. Die am Kondensator C1 anliegende Spannung Ũₑ ist über einen Widerstand P4 auf den Eingang des ersten Komparators 16 gelegt. Durch den Widerstand R4 und einen den Eingang des Komparators 16 mit dessen Ausgang verbindenden Widerstand R5 ist der Komparator 16 schaltungstechnisch mit einer Schalthysterese Δ=Δ1+Δ2 versehen. Dem Widerstand R5 ist dabei zur Erhöhung der Störfestigkeit ein Kondensator C3 parallelgeschaltet. Am Referenzeingang des ersten Komparators 16 liegt die vorgegebene Referenzspannung U_{ref1} an.

Überschreitet die Spannung Ũₑ den Einschaltpegel U_{ref1}+Δ2 des ersten Komparators 16, so wechselt dessen Ausgangsspannung Ũₛ von "low" auf "high". Diese wird dem in Form eines zweiten Tiefpasses R6,Cx realisierten Zeitverzögerungsmodul 17 zugeführt. Cx steht in diesem Zusammenhang für eine Anzahl von Kondensatoren C5,C6,C7,C8 die alternativ als Kapazität für den zweiten Tiefpaß R6,Cx mittels eines Schalters 19 zuschaltbar sind. Cx bezeichnet weiterhin die Möglichkeit, daß keiner der Kondensatoren C5,C6,C7,C8 zugeschaltet ist. Diese in FIG 4 dargestellte Schalterstellung entspricht formal dem Anschluß eines Kondensators der Kapazität Null. Entsprechend arbeitet in diesem Fall die Verzögerungsschaltung 9 ohne Verzögerungszeit. Den Kondensatoren C5,C6,C7,C8 ist aus Gründen der elektro-magnetischen Verträglichkeit (EMV) ein Kondensator C4 mit im Vergleich zu den vorgenannten Kondensatoren vernachlässigbarer Kapazität parallelgeschaltet. Der Widerstand R6 dient als Ladewiderstand von Cx. Ein dem Widerstand R6 parallelgeschalteter Widerstand R8 dient desweiteren als Entladewiderstand. Über die Dioden D4 und D5 sind die Widerstände R6 und R8 entkoppelt. Die getrennte Ausführung von Lade- und Entladewiderstand R6 bzw. R8 ermöglicht es, die Einstellung der Rücksetzzeit des Zeitverzögerungsmodules 17 in den Ausgangszustand (Cx ungeladen) nach der Unterbrechung des Fehlerstromes unabhängig von allen anderen Forderungen einzustellen.

Ist einer der Kondensatoren C5,C6,C7,C8 zugeschaltet, so wird infolge des Einschaltvorgangs des ersten Komparators 16 über einen Widerstand R6 und die Diode D4 zunächst der zugeschaltete Kondensator Cx geladen. Die infolge dieses Ladevorgangs am zugeschalteten Kondensator Cx steigende Spannung liegt über einen Widerstand R7 am Eingang des zweiten Komparators 18 an. Übersteigt diese Spannung den Einschaltpegel des zweiten Komparators 18, so wechselt der zweite Komparator 18 die Ausgangsspannung Uₐ von "low" auf "high". Der Einschaltpegel des zweiten Komparators 18 ist abhängig von der an seinem Eingang anliegenden Referenzspannung U_{ref2}. Dieses Einschalten der Ausgangsspannung Uₐ führt dann zur Betätigung des Auslösers 11.

Die Ladezeitkonstante R1 x C1 des ersten Tiefpasses R1,C1 ist auf R1 x C1 ≤ 10msec begrenzt, um eine kurze Auslösezeit - insbesondere bei unverzögerter Einstellung oder sehr kurzer Zeitverzögerungseinstellung - zu erreichen. Je hochohmiger der Entladewiderstand (R2+R1) des ersten Tiefpasses R1,C1 ausgeführt ist, desto geringer ist die Welligkeit der Spannung am Eingang des ersten Komparators 16. Gleichzeitig vergrößert jedoch ein zu großer Entladewiderstand (R1+R2) die Auslösezeit des Schutzschaltgerätes u.U. unzulässig. Ist nämlich der Kondensator C1 infolge eines zeitlich begrenzten Fehlerstromes aufgeladen, so sinkt die Spannung Ũₑ nur langsam mit der Entladezeitkonstante (R1+R2) x C1, ab. Dauert der Abfall von Ũₑ nach dem Abreißen des Fehlerstromes bis zum Erreichen der Ausschaltschwelle des Komparators zu lange, sind die sich entgegenstehenden Forderungen der Auslöse- und Nichtauslöseprüfung nicht mehr realisierbar. Dies gilt insbesondere dann, wenn eine geringe Zeitverzögerung eingestellt ist. Aus diesem Grund beträgt der Entladewiderstand (R1+R2) lediglich das 5- bis 15-fache des Ladewiderstands R1. Entsprechend gilt für die Zeitkonstanten, die sich aus dem Produkt der Kapazität C1 und dem entsprechenden Widerstand ergeben, die Beziehung 5 ≤ [(R1+R2) x C1]/[R1 x C1] ≤ 15. Eine verbleibende Welligkeit der Eingangsspannung Ũₑ ist dabei unbedenklich. Ein durch diese Welligkeit verursachtes wiederholtes Ein- und Ausschalten des ersten Komparators 16 wird durch eine ausreichend große, auf das Glättungsmodul abgestimmte Hysterese Δ ≥ 100mV vermieden. Die Hysterese Δ wird in bekannter Weise durch entsprechende Dimensionierung der Widerstände R4 und R5 eingestellt.

Als weiteres Mittel zur Verkürzung der Entladezeit des Kondensators C1 ist diesem eine Zenerdiode D3 parallelgeschaltet. Diese begrenzt die maximal am Kondensator C1 anliegende Spannung auf einen Wert U_{G}, der unmittelbar oberhalb des Einschaltpegels U_{ref1}+Δ1 des ersten Komparators 16 liegt.

Der zur Dämpfung von Stoßströmen mit geringer Repititionsrate vorgesehene Stoßstromfilter 15 ist in Form eines dritten Tiefpasses R1,C2 ausgeführt. Dessen Kodensator C2 wird dabei über den Ladewiderstand R1 und die Diode D2 geladen. Die Entladezeitkonstante R3 x C2 beträgt dabei etwa das 50-fache der Ladezeitkonstante R1 x C2. Infolge der vergleichsweise hohen Entladezeitkonstante R3 x C2 wirkt der Stoßstromfilter 15 nur bei selten wiederkehrenden kurzzeitigen Ableitströmen.

## Patentansprüche

1. Schutzschaltgerät, insbesondere Differenzstromschutzschalter, mit einer Verzögerungsschaltung (9), die ein Glättungsmodul (14) zur Glättung einer einen Fehlerstrom anzeigenden Eingangsspannung (Uₑ) und einen dem Glättungsmdul (14) nachgeschalteten ersten Komparator (16) zur Ausgabe einer internen Signalspannung (Uₛ) sowie einen zweiten Komparator (18) zur Ausgabe einer gegenüber der Signalspannung (Uₛ) zeitverzögerten Auslösespannung (Uₐ) umfasst, wobei zwischen die Komparatoren (16,18) ein Zeitverzögerungsmodul (17) geschaltet ist, **dadurch gekennzeichnet, dass**
- das Glättungsmodul (14) einen ersten Tiefpass (R1,C1) aufweist,
- das Zeitverzögerungsmodul (17) einen zweiten Tiefpass (R6, Cx) aufweist und
- dem ersten Komparator (16) ein Stossstromfilter (15) mit einem dritten Tiefpass (R1,C2) vorgeschaltet ist,
wobei das Zeitverzögerungsmodul (17) eine einstellbare Verzögerungszeit aufweist.

2. Schutzschaltgerät nach Anspruch 1, **dadurch gekennzeichnet, dass** das Glättungsmodul (14) einen ersten Tiefpass (R1,C1) mit einem ersten Entladekreis (R1,R2,C1) umfasst, dem eine Zenerdiode (D3) als Spannungsbegrenzer parallelgeschaltet ist.

3. Schutzschaltgerät nach Anspruch 2, **dadurch gekennzeichnet, dass** die Durchbruchspannung der Zenerdiode (D3) etwa dem Einschaltpegel (U_{ref1}+Δ2) des ersten Komparators (16) entspricht.

4. Schutzschaltgerät nach einem der Ansprüche 1 bis 3, **dadurch gekennzeichnet, dass** die Ladezeitkonstante (R1 x C1) und die Entladezeitkonstante ([R1+R2] x C1) des ersten Tiefpasses (R1,C1) zueinander in einem Verhältnis 5 ≤ [(R1+R2) x C1]/[R1 x C1] ≤ 15 stehen.

5. Schutzschaltgerät nach einem der Ansprüche 1 bis 4, **dadurch gekennzeichnet, dass** der erste Komparator (16) eine Schalthysterese Δ ≥ 100mV aufweist.

6. Schutzschaltgerät nach einem der Ansprüche 1 bis 5, **dadurch gekennzeichnet, dass** der zweite Tiefpass (R6,Cx) eine einstellbare Kapazität (Cx) umfasst.

7. Schutzschaltgerät nach Anspruch 6, **dadurch gekennzeichnet, dass** zur Einstellung der Kapazität (Cx) eine Anzahl von Kondensatoren (C5,C6,C7,C8) unterschiedlicher Kapazität alternativ dem zweiten Tiefpass (R6,Cx) zuschaltbar ist.

8. Schutzschaltgerät nach einem der Ansprüche 1 bis 7, **dadurch gekennzeichnet, dass** der dritte Tiefpass (R1,C2) durch eine Diode (D2) entkoppelt ist und einen zweiten Entladekreis (R3,C2) umfasst.

9. Schutzschaltgerät nach Anspruch 8, **dadurch gekennzeichnet, dass** die Entladezeitkonstante (R3 x C2) und die Ladezeitkonstante (R1 x C2) des dritten Tiefpasses (R1,C2) zueinander in einem Verhältnis (R3 x C2)/(R1 x C2) ≥ 50 stehen.

10. Schutzschaltgerät nach einem der Ansprüche 1 bis 9, **dadurch gekennzeichnet, dass** dem zweiten Entladekreis (R3) eine Zenerdiode (D3) als Spannungsbegrenzer parallelgeschaltet ist.

11. Schutzschaltgerät nach einem der Ansprüche 1 bis 10, **dadurch gekennzeichnet, dass** die Entladezeitkonstante des Zeitverzögerungsmoduls (17) (R8 x Cx) mittels eines Entladewiderstands (R8) unabhängig von dessen Ladezeitkonstante (R6 x Cx) einstellbar ist.

## Claims

1. Circuit breaker, in particular a residual-current circuit breaker, having a delay circuit (9) which comprises a smoothing module (14) for smoothing an input voltage (Uₑ) which indicates a fault current, and a first comparator (16) which is downstream of the smoothing module (14) and is intended to output an internal signal voltage (Uₛ), as well as a second comparator (18) which is intended to output a tripping voltage (Uₐ) which is delayed with respect to the signal voltage (Uₛ), with a time-delay module (17) being connected between the comparators (16, 18), **characterized in that**
- the smoothing module (14) has a first low-pass filter (R1, C1),
- the time-delay module (17) has a second low-pass filter (R6, Cx), and
- there is a surge-current filter (15) with a third low-pass filter (R1, C2) upstream of the first comparator (16),
with the time-delay module (17) having a variable delay time.

2. Circuit breaker according to Claim 1, **characterized in that** the smoothing module (14) comprises a first low-pass filter (R1, C1) with a first discharge circuit (R1, R2, C1), in parallel with which a zener diode (D3) is connected, as a voltage limiter.

3. Circuit breaker according to Claim 2, **characterized in that** the breakdown voltage of the zener diode (D3) corresponds approximately to the switch-on level (U_{ref1} + Δ2) of the first comparator (16).

4. Circuit breaker according to one of Claims 1 to 3, **characterized in that** the ratio of the charging time constant (R1 x C1) to the discharge time constant ([R1 + R2] x C2) of the first low-pass filter (R1, C1) is 5 ≤ [(R1 + R2) x C1]/[R1 x C1] ≤ 15.

5. Circuit breaker according to one of Claims 1 to 4, **characterized in that** the first comparator (16) has switching hysteresis Δ ≥ 100 mV.

6. Circuit breaker according to one of Claims 1 to 5, **characterized in that** the second low-pass filter (R6, Cx) comprises a variable capacitance (Cx).

7. Circuit breaker according to Claim 6, **characterized in that,** in order to adjust the capacitance (Cx), a number of capacitors (C5, C6, C7, C8) of different capacitance can be connected as an alternative to the second low-pass filter (R6, Cx).

8. Circuit breaker according to one of Claims 1 to 7, **characterized in that** the third low-pass filter (R1, C2) is decoupled by means of a diode (D2) and comprises a second discharge circuit (R3, C2).

9. Circuit breaker according to Claim 8, **characterized in that** the ratio of the discharge time constant (R3 x C2) to the charging time constant (R1 x C2) of the third low-pass filter (R1, C2) is (R3 x C2)/(R1 x C2) ≥ 50.

10. Circuit breaker according to one of Claims 1 to 9, **characterized in that** a zener diode (D3) is connected in parallel with the second discharge circuit (R3), as a voltage limiter.

11. Circuit breaker according to one of Claims 1 to 10, **characterized in that** the discharge time constant of the time-delay module (17) (R8 x Cx) can be adjusted by means of a discharge resistor (R8), independently of its charging time constant (R6 x Cx).

## Revendications

1. Disjoncteur de protection électrique, en particulier interrupteur de protection différentiel, avec un circuit à retard (9) qui comprend un module de lissage (14) pour lisser une tension d'entrée (Uₑ) qui indique un courant de défaut, et un premier comparateur (16) en aval du module de lissage (14) pour produire en sortie une tension de signal interne (Uₛ) ainsi qu'un deuxième comparateur (18) pour produire en sortie une tension de déclenchement (Uₐ) en retard par rapport à la tension de signal (Uₛ), un module de retard (17) étant monté entre les comparateurs (16, 18), **caractérisé en ce que**
- le module de lissage (14) comporte un premier passe-bas (R1, C1),
- le module de retard (17) comporte un deuxième passe-bas (R6, Cx) et
- un filtre de courant de choc (15) avec un troisième passe-bas (R1, C2) est monté en aval du premier comparateur (16),
le module de retard (17) présentant un temps de retard réglable.

2. Disjoncteur de protection électrique selon la revendication 1, **caractérisé en ce que** le module de lissage (14) comprend un premier passe-bas (R1, C1) avec un premier circuit de décharge (R1, R2, C1) avec lequel une diode Zener (D3) est montée en parallèle en tant que limiteur de tension.

3. Disjoncteur de protection électrique selon la revendication 2, **caractérisé en ce que** la tension de claquage de la diode Zener (D3) correspond à peu près au niveau de mise en marche (U_{ref1} + Δ2) du premier comparateur (16).

4. Disjoncteur de protection électrique selon l'une des revendications 1 à 3, **caractérisé en ce que** la constante de temps de charge (R1 x C1) et la constante de temps de décharge (R[R1 + R2] x C1) du premier passe-bas (R1, C1) sont l'une à l'autre dans un rapport 5 ≤ [(R1 + R2) x C1] / [R1 x C1] ≤ 15.

5. Disjoncteur de protection électrique selon l'une des revendications 1 à 4, **caractérisé en ce que** le premier comparateur (16) présente une hystérèse de commutation telle que Δ ≥ 100 mV.

6. Disjoncteur de protection électrique selon l'une des revendications 1 à 5, **caractérisé en ce que** le deuxième passe-bas (R6, Cx) comprend une capacité réglable (Cx).

7. Disjoncteur de protection électrique selon la revendication 6, **caractérisé en ce que,** aux fins du réglage de la capacité (Cx), un nombre de condensateurs (C5, C6, C7, C8) de capacité différente sont, alternativement, commutables sur le deuxième passe-bas (R6, Cx).

8. Disjoncteur de protection électrique selon l'une des revendications 1 à 7, **caractérisé en ce que** le troisième passe-bas (R1, C2) est découplé par une diode (D2) et comprend un deuxième circuit de décharge (R3, C2).

9. Disjoncteur de protection électrique selon la revendication 8, **caractérisé en ce que** la constante de temps de décharge (R3 x C2) et la constante de temps de charge (R1 x C2) du troisième passe-bas (R1, C2) sont l'une à l'autre dans un rapport (R3 x C2) / (R1 x C2) ≥ 50.

10. Disjoncteur de protection électrique selon l'une des revendications 1 à 9, **caractérisé en ce qu'**une diode Zener (D3) est montée, en tant que limiteur de tension, en parallèle avec le deuxième circuit de décharge (R3).

11. Disjoncteur de protection électrique selon l'une des revendications 1 à 10, **caractérisé en ce que** la constante de temps de décharge du module de retard (17) (R8 x Cx) est réglable au moyen d'une résistance de décharge (R8) indépendamment de la constante de temps de charge (R6 x Cx) de celle-ci.
